# EUROPEAN PATENT APPLICATION

(11) **EP 4 231 435 A1**
(43) Date of publication of application: **23.08.2023**
(21) Application number: 22156911.4
(22) Date of filing: 16.02.2022
(51) Int. Cl.: H01M 50/559, H01M 50/567, H01M 50/552, H01M 50/107, H01M 50/179

(54) **TERMINAL PART FOR A SECONDARY CELL**

(71) Applicant: Northvolt AB, 112 47 Stockholm (SE)
(72) Inventor: Shatani, Kenya, 118 49 Stockholm (SE); Makino, Tetsuya, 169 73 Solna (SE)
(74) Representative: AWA Sweden AB

(57) **Abstract**

The present application generally relates to terminal parts (4) for a secondary cell, current collecting plates (6) for a secondary cell, a terminal assembly comprising such a terminal part (4) and current collecting plates (6), and secondary cells comprising such elements.

## Description

### Technical field

The present disclosure generally relates to terminal parts for a secondary cell, current collecting plates for a secondary cell, a terminal assembly comprising such a terminal part and current collecting plates, and secondary cells comprising such elements.

### Background

In addressing climate change, there is an increasing demand for rechargeable batteries, e.g., to enable electrification of transportation and to supplement renewable energy. Currently, lithium-ion batteries are becoming increasingly popular. They represent a type of rechargeable battery in which lithium ions move from the negative electrode to the positive electrode during discharge and back when charging.

As the demand for rechargeable batteries increases, more and more focus is placed on production speed. To achieve an effective production of rechargeable batteries, the design of the batteries as well as their manufacturing process can be optimized.

A rechargeable battery, often referred to as a secondary battery, typically comprises one or more secondary cells electrically connected to each other.

Consequently, there exists a desire in the industry to produce durable and lightweight parts for rechargeable battery applications.

### Summary

The present disclosure aims at providing an improved secondary cell and parts thereof. The improvements may be in energy performance, manufacturing efficiency, decreased amount of material used and assembly simplification.

According to a first aspect, there is provided a terminal part for a cylindrical secondary cell, comprising a head portion adapted to form an external terminal of the cylindrical secondary cell and a shaft portion adapted to extend through a wall of the cylindrical secondary cell. The shaft portion has a first end attached to the head portion and a second end arranged to face a current collecting plate in the cylindrical secondary cell. The second end of the shaft portion comprises a protruding portion radially surrounding a recess, a contact portion arranged in the recess, and a groove arranged in the recess and extending along a perimeter of the contact portion.

The terminal part may be attached to a current collecting plate in the secondary cell. The terminal part may act as an external terminal of the cylindrical secondary cell and seal the cylindrical secondary cell.

The terminal part can be arranged in a cylindrical secondary cell by means of riveting. To attach the terminal part to the secondary cell, the terminal part may be arranged in a through-hole of a can of cylindrical secondary cell. Thereafter, a force may be applied to at least part of the head portion and to at least part of the shaft portion to plastically deform at least part of the shaft portion to form a rivet.

Herein, the expression "the shaft portion having a first end attached to the head portion" is to be understood as either the shaft portion and the head portion being formed as one single unit, or as two separate parts joined together by e.g., a conductive adhesive, a welding process or a hot pressing process.

The provided groove advantageously decreases the risk of the protruding portion breaking, fracturing, and/or accumulating cracks during riveting. During riveting the protruding portion may plastically deform and/or expand radially to form a flange, i.e., a shop rivet head. This allows the terminal part to be attached to a can of a cylindrical secondary cell. It is understood that a separating means, such as an electrically isolating means, may be arranged between the terminal part and the can. After riveting, the protruding portion may form an extending flange which may increase the accessibility of the contact portion and allow the contact portion to be arranged in direct electrical contact with a current collecting plate provided in the secondary cell. The contact portion may thus, after riveting, be arranged further away from the head portion as compared to the protruding portion. It is understood that the contact portion and the protruding portion may be arranged substantially level after riveting.

Another advantage with the groove is that it prevents the contact portion from deforming during riveting. The contact portion can be used to attach the terminal part to the current collecting plate, and it is therefore advantageous that the contact portion is flat to ensure good contact therebetween.

Further, by providing a recess and a groove in the terminal part, less material may be required compared to a terminal part lacking the recess and/or groove. Using less material in the manufacturing process is more cost-effective and more environmentally friendly. Further, the terminal part of the present disclosure may have a lower weight compared to terminal parts lacking the recess and/or groove. This is beneficial not only in a plurality of applications such as hand-held tools and vehicles but also in decreased fuel consumption during shipping.

The term "direct electrical contact" may be understood as direct electrical and mechanical contact. Expressed differently, a direct electrical contact between e.g. a terminal part and e.g. a current collecting plate may be understood as an electrical path formed between the elements without any intermediate conducting means therebetween.

By the term "wall" of the cylindrical secondary cell may be understood any wall of the cylindrical cell, such as part of the can or the lid. Preferably, the wall of the secondary cylindrical cell may form part of the can. In that case, the top or the bottom portion of the cell may be open-ended. The shaft portion may be configured to be inserted into a through hole provided in the wall of the can. The head portion may be attached as a flange on the shaft portion and may act as stop for the terminal part. Consequently, the head portion will remain on the outside of the can, where it can be utilized as a terminal of the secondary cell.

The wall of the can is preferably a top or bottom wall of the can. It may also refer to a lid provided to close an open top or bottom portion of a secondary cell. The shaft portion may consequently have a length that allows it to extend from the head portion to the inside of the can.

The current collecting plate may herein be referred to as a current collecting disc or an electrode lead plate. The current collecting plate may have a general shape of a circular disc. Current collecting plates may be provided with a first portion arranged to contact the terminal part and a second portion arranged to contact an electrode provided in the secondary cell. In cylindrical secondary cells, the electrode is typically provided in the form an electrode roll (jelly roll).

The terminal part may be a rivet where the head portion is adapted to, after riveting, form a factory rivet head and the shaft portion is adapted to, after riveting, form a shop rivet head. During manufacture of a cylindrical cell, the terminal part may be riveted, thus plastically deformed, such that a portion of the shaft portion is expanded radially to form a shop rivet head. After riveting, the head portion of the terminal part may also be referred to as a factory rivet head.

The shop rivet head may hinder the terminal part from being pulled out of a terminal through-hole in the can end wall. The factory rivet head may be positioned on the outside of the can and may act as a terminal for electrical connection to the battery cell.

At least part of the groove, such as a bottom portion, may have a semi-circular, semi-elliptical or semi-slotted cross section. This decreases the risk of mechanical failure such as fracture of and/or crack formation in the terminal part during riveting. The semi-slotted groove may be considered a sequential arrangement of cavities and solid parts. It is understood that the solid parts are arranged to deform during riveting. It is further understood that the solid parts may provide mechanical stability to the terminal portion prior to riveting and during manufacture.

The contact portion may be a flat surface. It is understood that flat surfaces may have a surface roughness resulting e.g. from the manufacturing thereof. The flat surface allows for an improved electrical contact between the contact portion and a current collecting plate when arranged in a cylindrical secondary cell. The flat surface may further provide improved riveting characteristics of the terminal part by allowing for sufficient pressure to be delivered to the terminal part during riveting.

The head portion may be provided with a protrusion element arranged at a surface of the head portion adapted to face the wall of the cylindrical secondary cell. When arranged in a cylindrical secondary cell, the protrusion element may at least partly abut a sealing member, or gasket. This improves seal between the terminal part, the gasket and a can of a cylindrical secondary cell. Thus, the risk of leakage of electrolyte out of the cylindrical secondary cell may advantageously be decreased. The protrusion element may further decrease the risk of the gasket moving from its intended position during e.g. transport or operation. Consequently, the protrusion element, when arranged in a cylindrical secondary cell, advantageously decreases the risk of short-circuiting the cell by keeping the gasket in the intended position. It is understood that the gasket preferably is electrically insulating. The protrusion may be coaxially arranged with the shaft portion. The protrusion element may be arranged such that a gap is formed between the protrusion element and the shaft. Expressed differently, the protrusion element may be configured so as to extend into a gasket during riveting allowing for a tight and improved seal between the terminal part and the can. It is understood that the protrusion element extends into the gasket also after riveting.

The head portion may comprise a welding region and a flange region, wherein the flange region radially surrounds the welding region, and wherein the welding region is recessed in relation to the flange region. This allows for the terminal part to be welded to the current collecting plate from the outside. The recessed welding region decreases the amount of solid material between a top surface of the welding region and the current collecting plate. Consequently, less material needs to be heated to form the weld. Expressed differently, the provision of a recessed welding region in the head portion of the terminal part locally reduces the thickness of the part. Welding, preferably laser beam welding, can consequently be used to attach the contact region to the current collector plate, for instance by application of the laser onto the welding region of the head portion from the outside of the cylindrical cell. This may alleviate attachment of the terminal part to a current collector plate in a cylindrical cell. Furthermore, forming a terminal part with a recess may require less material than forming a corresponding terminal part without a recess.

The welding region and the flange region may hence extend in parallel planes that are distanced or separated from each other. The planes may be parallel with the general extension of the head portion and may be distanced along an axis that is orthogonal to both planes.

The head portion may have a diameter D1, whereas the shaft portion may have a diameter D2. The ratio between D1 and D2 may be in the range of about 1.5 to about 3, such as about 2 to about 3, such as about 2 to about 2.8. For example, D1 may be in the range of from about 8-20 mm and D2 in the range of from about 3-8 mm. A too large ratio between D1 and D2 has been found to complicate the manufacturing process and is thus undesirable.

According to a second aspect, there is provided a cylindrical secondary cell comprising:
an electrode roll comprising a conductive sheet;
a current collecting plate configured to be in direct electrical contact with the conductive sheet;
a can arranged to at least partly enclose the electrode roll; and
a terminal part as defined in the first aspect riveted to the can and configured to be in direct electrical contact with the current collecting plate.

An electrode roll may herein also be referred to as a jelly roll. The electrode roll comprises a first and a second conductive sheet, and a separating means. The separating means may also be termed separator. The conductive sheets and the separating means are rolled to form a circular cylindrical roll defining a central channel. The sheets may be coated with electrode coatings to prevent the first and the second conductive sheet from short-circuiting. Electrode rolls are known to the person skilled in the art.

According to a third aspect, there is provided a current collecting plate for a cylindrical secondary cell, comprising:
an inner contact region configured to be in direct electrical contact with a terminal part;
an outer contact region configured to be arranged in direct electrical contact with a conductive sheet of an electrode roll of a cylindrical secondary cell, wherein the outer contact region radially surrounds the inner contact region, and wherein the inner contact region is recessed in relation to the outer contact region; and
an interface region arranged between the inner contact region and the outer contact region, wherein the interface region uninterruptedly joins the inner contact region and the outer contact region.

By recessing the inner contact region in relation to the outer contact region the alignment during assembly of the cylindrical secondary cell, comprising a collecting plate of the present disclosure, may be improved. Thus, the inner contact region may be recessed in relation to the outer contact region. In other words, the inner contact region and the outer contact region may extend in parallel planes that are distanced from each other. The planes may be parallel with the general extension of the current collecting plate and may be distanced along an axis that is normal to both planes.

The interface region uninterruptedly joining the inner contact region and the outer contact region can herein be understood as joining the inner and outer contact regions in a continuous fashion e.g., without any through holes or disruptions.

The outer contact region may comprise a number of electrolyte flow holes. The electrolyte flow holes may allow electrolyte to flow through the current collecting plate. The electrolyte flow holes may be arranged in a pattern so as to allow for welding the current collecting plate to the conductive sheet by a plurality of non-intersecting straight weld lines that extend across the current collecting plate. The weld lines may for example be laser weld lines.

The inner contact region may be a depression. The current collecting plate may thus be understood as comprising an inner bottom portion arranged opposite the inner contact region and an outer bottom portion arranged opposite the outer contact region, wherein the inner bottom portion and the outer bottom portion extend in parallel planes that are distanced from each other. The inner bottom portion and the outer bottom portion may be distanced along an axis that is normal to the parallel planes.

The inner contact region may be a recess. The current collecting plate may thus be considered to comprise an inner bottom portion arranged opposite of the inner contact region and an outer bottom portion arranged opposite the outer contact region, wherein the inner bottom portion and the outer bottom portion extend in a mutual plane (thus forming a flat surface).

Put differently, a recess may be understood as an indentation in a surface of the current collecting plate, formed by removing material from the plate, whereas a depression may be understood as a plastic deformation of the plate, resulting in a corresponding protrusion on the opposite side of the plate.

According to a fourth aspect, there is provided cylindrical secondary cell comprising:
an electrode roll comprising a conductive sheet;
a terminal part; and
a current collecting plate as defined the third aspect configured to be in direct electrical contact with the conductive sheet and the terminal part.

According to a fifth aspect, there is provided a terminal assembly for a cylindrical secondary cell comprising:
a terminal part as defined in the first aspect; and
a current collecting plate as defined in the third aspect;
wherein the terminal part is adapted to be in direct mechanical and electrical contact with the current collecting plate.

The inventors have realised that the terminal part as defined in the first aspect and the current collecting plate as defined in the third aspect when arranged together may provide a terminal assembly that is improved in view of the prior art. The terminal assembly has an improved mechanical stability, processability and a stable electrical contact between the terminal part and the current collecting plate.

The advantages of the terminal part and the current collecting plate may thus be synergistically combined in a terminal assembly. Advantages of such terminal part is described in more detail in the parts of the present disclosure relating to the first aspect. Advantages of such current collecting plate is described in more detail in the parts of the present disclosure relating to the third aspect.

The terminal assembly may be configured as a positive terminal.

The contact portion of the terminal part may be in direct electrical contact with the inner contact region of the current collecting plate.

According to a sixth aspect of the present disclosure, there is provided a terminal part for a cylindrical secondary cell comprising a head portion adapted to form an external terminal of the cylindrical secondary cell and a shaft portion adapted to extend through a wall of the cylindrical secondary cell. The head comprises a welding region and a flange region, wherein the flange region radially surrounds the welding region, and wherein the welding region is recessed in relation to the flange region. The recessed welding portion allows the terminal part to be welded to a current collecting plate by laser welding directed to the recessed welding portion. Consequently, the terminal part can be attached to a current collecting plate in a secondary cell from the outside of the secondary cell.

In order to provide electrical contact between the terminal part and a current collector plate in a cylindrical cell, an end portion of the shaft portion may comprise a contact region which is configured to be attached to the current collector plate. The provision of a recessed welding region in the head portion of the terminal part locally reduces the thickness of the terminal part. Welding, preferably laser beam welding, can consequently be used to attach the contact region to the current collector plate, by application of the laser onto the welding region of the head portion from the outside of the cylindrical cell. This alleviates attachment of the terminal part to a current collector plate in a cylindrical cell. Furthermore, a terminal part with a recess consumes less material than a corresponding terminal part without a recess.

The shaft portion and the welding region may be co-axially arranged, such that the welding region may be concentrically arranged within the shaft portion. This means that a central axis of the shaft portion is co-axially aligned with a central axis of the welding portion. Preferably, the welding region may be radially symmetrical around its central axis. Preferably, the shaft portion may be radially cylindrical around its central axis.

The terminal part may be a rivet, and the head portion may be adapted to, after riveting, form a factory rivet head. Further, the shaft portion may be adapted to, after riveting, form a shop rivet head. During manufacture of a cylindrical cell, the terminal part may be riveted, thus plastically deformed, such that a portion of the shaft portion is expanded radially to form a shop rivet head. After riveting, the head portion of the terminal part is also called factory rivet head.

The shop rivet head may hinder the terminal part from being pulled out of a terminal through-hole in a can end wall in a secondary cell. The factory rivet head is positioned on the outside of the can and acts as a terminal for electrical connection to the battery.

The shaft portion may have a first end attached to the head portion and a second end arranged to face a current collecting plate in the cylindrical secondary cell, wherein the second end of the shaft portion comprises:
a protruding portion radially surrounding a recess;
a contact portion arranged in the recess; and
a groove arranged in the recess and extending along a perimeter of the contact portion.

Advantages of such terminal part is described in more detail in the parts of the present disclosure relating to the first aspect.

The groove, or at least part of the groove, may be semi-circular, semi-elliptical or semi-slotted. For example, a bottom portion of the groove may have a semi-circular, semi-elliptical or semi-slotted profile.

Advantages of such terminal part is described in more detail in the parts of the present disclosure relating to the first aspect.

The contact portion may be a flat surface.

Advantages of such terminal part is described in more detail in the parts of the present disclosure relating to the first aspect.

The head portion may be provided with a protrusion element arranged at a surface of the head portion adapted to face the wall of the cylindrical secondary cell.

In a cylindrical secondary cell, there is typically provided an electrically isolating part arranged between the head portion and the can end wall. The electrically isolating part may be configured to surround the shaft portion of the terminal part. The electrically isolating part typically has a diameter that is larger than a diameter of the head portion. By providing a protruding element on the head portion, a tighter seal between the electrically isolating portion and the head portion can be obtained. The electrically isolating part is typically made of a softer material, such as a polymer, than the terminal part. Consequently, the protruding element may protrude into the electrically isolating part, which is then elastically or plastically deformed, to form a tight seal between the head portion and the electrically isolating part.

The head portion may have a diameter D1 and the shaft portion a diameter D2. The ratio between D1 and D2 may be in the range of about 1.5 to about 3. A too large ratio between D1 and D2 has been found to complicate the manufacturing process and is thus undesirable.

According to a seventh aspect of the present disclosure, there is provided a cylindrical secondary cell comprising:
an electrode roll comprising a conductive sheet;
a current collecting plate configured to be in direct electrical contact with the conductive sheet;
a terminal part as defined in the sixth aspect of the present disclosure; and
a can arranged to at least partly enclose the electrode roll;
wherein the terminal part is riveted to the can and configured to be in direct electrical contact with the current collecting plate.

The term riveted may be understood as the terminal part being riveted such that the shaft portion of the terminal part is plastically deformed and radially expanded.

The shaft portion may be deformed into a so-called shop rivet head. The shop rivet head hinders the terminal part (that may be referred to as a terminal rivet) from being pulled out of the through-hole in the can end wall.

According to an eight aspect of the present disclosure, there is provided terminal assembly for a cylindrical secondary cell comprising:
a terminal part as defined in the sixth aspect; and
a current collecting plate as defined in the third aspect;
wherein the terminal part is adapted to be arranged in direct mechanical and electrical contact with the current collecting plate.

The terminal assembly may be configured as a positive terminal.

The contact portion of the terminal part may be arranged in direct contact with the inner contact region of the current collecting plate. The recessed inner contact region of the current collecting plate can, during manufacture of a cylindrical cell, act as a guide for the contact portion of the shaft portion which alleviates the assembly of the cylindrical cell.

### Brief description of drawings

The above and other aspects of the present invention will now be described in more detail, with reference to the appended figures.
Figure 1 schematically depicts, in cross-section, a top portion of a cylindrical secondary cell.
Figure 2 schematically depicts, in cross-section, a top portion of a cylindrical secondary cell.
Figures 3 to 6 schematically depict, in cross-section, a terminal part according to examples of the present disclosure.
Figures 7a-d depict, in cross-section, grooves of the terminal part according to examples of the present disclosure.
Figure 8 schematically depicts, in cross-section, a terminal part according to examples of the present disclosure.
Figure 9 depicts a current collecting plate according to examples of the present disclosure.
Figures 10 and 11, depict, in cross-section, current collecting discs according to examples of the present disclosure.

### Detailed description

The present invention will now be described hereinafter with reference to the accompanying drawings, in which currently preferred, examples of the invention are illustrated.

A rechargeable battery, often referred to as a secondary battery, typically comprises one or more secondary cells (herein referred to simply as "cells") electrically connected to each other. A cell having both terminals arranged at one end may bring advantages with regards to electrically connecting the cell to a load. Conductors electrically connecting the terminals to the load may then be positioned on the same end, the terminal end, of the cell. The opposite end may be dedicated to electrolyte filling and gas venting, and may hence be referred to as the electrolyte-filling end of the cell. An overpressure may be generated within the cell during operation, in particular upon malfunction of the cell or of the load connected to the cell. Such malfunction may require a pressure release action in which gas and/or electrolyte is discharged from the cell. It may be advantageous to direct the released gas and/or electrolyte away from the conductors.

Furthermore, a plurality of cells are typically positioned at a low position in an electric vehicle. The cells may be arranged with their terminal ends directed upwards and the electrolyte-filling ends directed downwards. Upon malfunction, for example resulting from a faulty electric vehicle charger or a faulty cell, a release of gas and/or electrolyte from the electrolyte-filling end(s) will be advantageously directed downwards towards the ground beneath the vehicle.

When both terminals of a cell are arranged at one end of the cell, isolation between the conductors that are electrically connecting the terminals to the load is very important. One terminal is, for example, formed by the enclosure of the cell, also referred to as the can. The conductor of the other terminal may extend through a can hole in the can end wall. The terminal part typically serves the dual purposes of proving an electrical terminal and sealing the can to prevent leakage of electrolyte. Advantageously, the terminal part may be provided in the form of a rivet.

This disclosure relates to a cylindrical secondary cell having both terminals arranged at one end. However, the teachings herein can also be applied to cells wherein the terminals are arranged on opposite sides of the cell. The cell may comprise an isolating part (sometimes referred to as simply a resin) arranged in a can hole at the end comprising the terminals to isolate a terminal part from the can end.

Examples of the present disclosure will now be described more fully hereinafter, with reference to the figures. The same reference numbers are used throughout the figures. The invention may, however, be embodied in many different forms and should not be construed as limited to the examples set forth herein; rather, these examples are provided so that this disclosure will be thorough and complete, and will fully convey the scope of the invention to the persons skilled in the art.

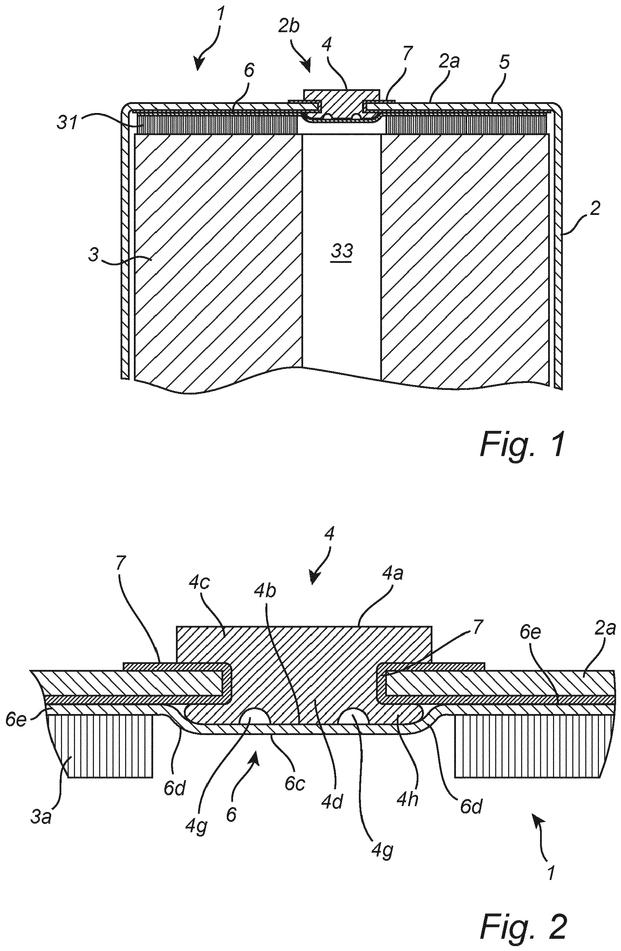

Figure 1 depicts, in cross-section, an example layout of a top portion of a cylindrical secondary cell 1 (hereinafter also referred to as cell). The cell comprises a cylindrical can 2 having a can end wall 2a (the top end wall of the cylindrical can in figure 1) and an opposite can end (not shown). The cylindrical can 2 may also be referred to as an enclosure. The can end wall 2a may be formed in one piece with the cylindrical can 2 (as illustrated in figure 1) and the other can end may be formed by a separate can end lid (not shown), or vice versa. Both the can ends may alternatively be formed by respective lids.

The cylindrical can 2 is filled with an electrolyte. An electrode assembly 3, typically a jelly-roll, is arranged inside the cylindrical can 2. A jelly-roll is a commonly used type of electrode assembly having a structure in which a positive electrode and a negative electrode each having a long sheet shape are wound with a separator interposed in-between. The cell 1 further comprises an current collecting plate 6 that is arranged at one end of the electrode assembly 3. The current collecting plate 6 is in direct electrical and physical contact with one of the electrodes of the electrode assembly, typically the positive electrode. The current collecting plate 6 may be attached, for example welded, for example laser beam welded, to the positive electrode.

The cell 1 has, as discussed above, both a positive terminal and a negative terminal at one and the same end (the top end in figure 1) of the cell 1. The can end wall 2a comprises a central terminal through-hole 2b (also referred to as can hole) for a terminal part 4 forming the positive terminal. The negative terminal is electrically connected to the cylindrical can 2 (not shown). More precisely, the negative terminal is formed by the outer surface 2g of the can end wall 2a that surrounds the terminal through-hole 2b. Thus, the entire cylindrical can 2 (apart from the terminal part 4 at the top end) may be the negative terminal.

The terminal part 4 provides a connection to an electrode of the electrode assembly 6 arranged inside the cylindrical can 2. The terminal part 4 is inserted into the terminal through-hole 2b formed in the can end wall 2a. The terminal part 4 protrudes out from the terminal through-hole 2b, and through the inner opening, into the cylindrical can 2. The terminal part 4 extends through the can end wall 2a and has an outer, or first, end 4a and an inner, or second, end comprising a contact portion 4b. The outer end 4a of the terminal part 4 may form the positive terminal of the cell 1. In the examples of the present disclosure, the terminal part 4 is rotational symmetric around its longitudinal center axis (not illustrated).

The terminal part 4 is in direct electrical contact with a current collecting plate 6. More specifically, the terminal part 4 is in direct electrical and physical contact with the current collecting plate 6. More precisely, a contact portion of the terminal part 4 is in direct electrical contact with the current collecting plate 6. The contact portion may be attached, for example welded, for example laser welded, to the current collecting plate 6. An isolating part 7 is arranged in the terminal through-hole 2b to electrically isolate the can end wall 2a from the terminal part 4. The isolating part 7 also serves as a seal preventing the electrolyte from leaking out from the cylindrical can 2.

Figure 2 shows in further detail the arrangement of the terminal part 4 in the terminal through-hole 2b in the can end wall 2a. The terminal part 4 is a rivet which comprises a head portion 4c and a shaft portion 4d arranged at one end of the shaft portion. In the present example, the terminal part 4 is integrally formed, i.e., with the head portion 4c and the shaft portion 4d formed from a single piece. The head portion 4c and the shaft portion 4d may in further examples be formed of two separate, or structurally distinct, elements joined so as to form the terminal part 4. The other end of the shaft portion 4d may be comprised of a contact portion 4b adapted to be in electrical contact with the current collecting plate 6. Around the perimeter of the contact portion 4b, a groove 4g is running. A flange portion 4h radially surrounds the groove and the contact portion. Before riveting, the flange portion 4h is a protruding portion 4h which radially surrounds the groove and the contact portion.

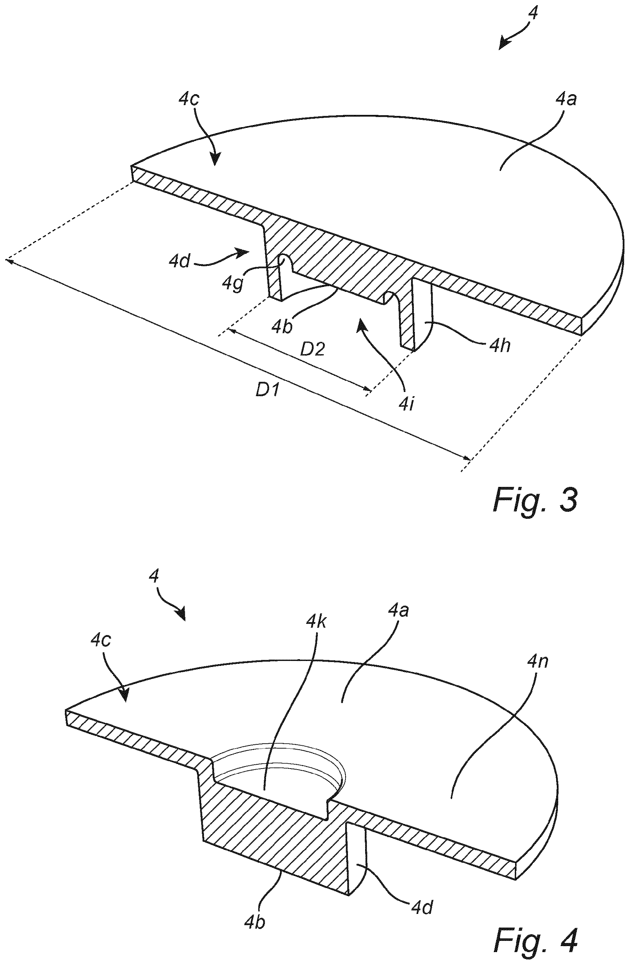

The rivet 4 is shown in its initial state, before riveting, in figure 3.

As shown in figure 2, the electrode roll 3 may comprise a first conductive sheet 3a, a second conductive sheet (not shown) and a separator (not shown). The conductive sheets 3a and the separating means may be rolled to form a circular cylindrical roll defining a central channel (not shown). The sheets 3a are coated with electrode active material and on assembly of the cell 1 the cylindrical enclosure 2 is filled with an electrolyte. The electrolyte may flow through the central channel or conduit. The coatings on the conductive sheets act as cathode and anode, respectively. The cathode, anode and electrolyte provide electrochemical energy storage. This principle is known per se, and the electrode roll 3 is commonly referred to as a jellyroll.

In figures 1 and 2, the upper end of the first conductive sheet 3a is not coated with electrode coating. Similarly, although not shown, the lower end of the second conductive sheet is not coated with electrode coating. In this way, the respective ends of the electrode roll 3 may be efficiently electrically connected to a respective assigned terminal of the cell 1. This design is known per se and commonly referred to as a tabless cell.

In this disclosure, only the connection between one of the conductive sheets 3a, and one of the terminals 4 will be discussed in detail. The other one of the conductive sheets is electrically connected to the other one of the terminals in a manner not discussed in detail herein.

As is illustrated in figures 1 and 2, the cell 1 comprises a current collecting plate 6 that is arranged at the upper end of the electrode roll 3. The current collecting plate 6 is in direct electrical contact with the first conductive sheet 3a, more precisely with the non-coated end section of the first conductive sheet 3a. The current collecting plate 6 may be attached, for example welded, for example laser welded, to the first conductive sheet 3a. The current collecting plate 6 is provided with a recessed inner contact region 6c and an outer contact region 6e. An intermediate region 6d uninterruptedly joins the inner contact region and the outer contact region. The inner contact region is arranged in electrical contact with at least the contact portion 4b of the terminal part 4. The outer contact region is arranged in electrical contact with the first conductive sheet 3a.

As is best shown in figure 2, the terminal part 4 may comprise electrically isolating means 7 surrounding at least a portion of the terminal part 4. In the examples of figures 1 and 2, the terminal part 4 has the shape of a rivet with a head portion 4c, or so-called factory rivet head, and a shaft portion 4d, or rivet shaft. In the examples of figures 1 and 2, the electrically isolating means is rotational symmetric. As is illustrated, the electrically isolating means 7 surrounds the rivet shaft 4d. The electrically isolating means may be referred to as a rivet gasket.

The rivet shaft 4d extends through a through-hole (the terminal through-hole 2c) in the first enclosure end 2a and is electrically isolated from the through-hole by the electrically isolating means 7. During manufacture of the cell 1, the rivet 4 is riveted, thus plastically deformed, such that a portion of the rivet shaft 4d is expanded radially, see especially figure 2. The rivet shaft 4d, in particular the protruding portion 4h shown in figure 3 is deformed to form a flange portion 4h. The flange portion may also be referred to as a so-called shop rivet head 4h. The shop rivet head 4h hinders the rivet 4 (that may be referred to as a terminal rivet) from being pulled out of the through-hole in the first enclosure end 2a.

Before riveting, the contact portion 4b is provided in a recess formed in the second end of the shaft portion 4d. The recessed portion 4i is surrounded by a protruding portion 4h in the shape of an annular wall that extends around the recess 4i. In said recess, there is also provided a groove 4g which extends around a perimeter of the contact portion 4b.

During riveting, the protruding portion is deformed to expand radially and forms a flange, which can be seen in figure 2. The provision of a groove 4g advantageously decreases the risk of the protruding portion breaking, fracturing, and/or accumulating cracks during riveting.

Consequently, the provided groove 4g allows for the provision of a recessed terminal part 4 that consumes less material than conventional terminal parts, but with preserved mechanical properties that prevent the protruding portion 4h to break during riveting.

Figure 3 depicts an example of a terminal part as shown in figures 1 and 2, before attachment to the secondary cell 1. The terminal part 4 is a rivet which comprises a head portion 4c adapted to form an external terminal of the cylindrical secondary cell (not shown). A shaft portion 4d of the terminal part adapted to extend through a wall 2a of the cylindrical secondary cell 1. The shaft portion 4d has a first end attached to the head portion 4c and a second end arranged to face a current collecting plate (not shown) in the cylindrical secondary cell. The second end of the shaft portion 4d comprises a protruding portion 4h radially surrounding a recess 4i, a contact portion 4b arranged in the recess, and a groove 4g arranged in the recess 4i and extending along a perimeter of the contact portion 4b.

The terminal part 4 may be arranged in a cylindrical secondary cell by riveting said terminal part 4. The groove 4g advantageously decreases the risk of the protruding portion 4h breaking, fracturing, and/or accumulating cracks during riveting. In this example the groove 4g is semi-circular. During riveting the protruding portion 4h plastically deforms so as to form an extending flange, i.e., a part of a shop rivet head. This allows for attachment of the terminal part 4 to, e.g., a can of a cylindrical secondary cell. It is understood that a separating means may be arranged between the terminal part and the can. The protruding portion 4h forming an extending flange during riveting increases the accessibility of the contact portion 4b. This allows for arranging the contact portion 4b in direct electrical contact with, e.g., a current collecting plate (not shown). The contact portion 4b may thus, after riveting, be arranged further away from the head portion 4c as compared to the protruding portion 4h. Alternatively the contact portion 4b and the protruding portion 4h may be arranged substantially level after riveting. Further, by providing a recess 4i and a groove 4g in the terminal part 4, less material used as compared to a terminal part lacking the recess and/or groove. Using less material in the manufacturing process is more cost-effective and more environmentally friendly. Further, the terminal part 4 of the present disclosure has a lower weight as compared to terminal parts lacking the recess and/or groove. This is beneficial not only in a plurality of applications such as hand-held tools and vehicles but also in that it can decrease the fuel consumption during shipping.

The head portion 4c and the shaft portion 4d may be considered a first and second cylinder. The first cylinder may have a larger diameter as compared to the second cylinder. It is understood that the first and second cylinder may be attached to each other. The first and the second cylinder may be manufactured separately and joined afterwards or manufactured as a single unit. The first and second cylinder may be coaxially aligned with a central axis. The protruding portion 4h, the recess 4i, and/or groove 4g may be coaxially arranged with the central axis. The head portion 4c, the shaft portion 4d, the protruding portion 4h, the recess 4i, and/or the groove 4g may be radially symmetric around the central axis.

The protruding portion 4h radially surrounding the recess 4i may be considered a wall at least partly enclosing the recess 4i.

In the present example, the contact portion 4b is a flat surface. It is understood that flat surfaces may have a surface roughness as a result from, e.g., the manufacturing process. The contact portion 4b having a flat surface allows for a good electrical contact between, e.g., the contact portion and a current collecting plate when arranged in a cylindrical secondary cell. The flat surface provides improved riveting characteristics of the terminal part by allowing for enough pressure to be delivered.

In present example, the head portion 4c has a diameter D1 and the shaft portion 4d has a diameter D2 and the ratio between D1 and D2 is above 1.

Figure 4 discloses a terminal part 4, herein depicted as a rivet. The rivet has a pin shape and comprises a head portion 4c and a shaft portion 4d. The terminal part 4 comprises a pin shaped body with a head portion 4c and a shaft portion 4d. The terminal part 4 is adapted to be inserted into a terminal through-hole formed in a can end wall of the can of the cell. Alternatively, the terminal through hole is formed in a lid adapted to cover a terminal end of the can.

The terminal part 4 may be adapted to protrude out from the terminal through-hole, and through the inner opening, into the cylindrical can. The terminal part 4 may thus extend through the can end wall and may be referred to as having an outer, or first, end 4a and an inner, or second, end 4b. The outer end 4a of the terminal part 4 may form the positive terminal of the cell 1. In the examples of the present disclosure, the terminal part 4 is rotational symmetric around its longitudinal centre axis (not illustrated).

During manufacture of a cell, the pin shaped terminal part 4 may be riveted, thus plastically deformed, such that a portion of the shaft portion 4d is expanded radially to form a flange. The head portion 4c of the terminal part 4 may also be called factory rivet head.

The shaft portion 4d is deformed to form a so-called shop rivet head. The shop rivet head hinders the terminal part 4 (that may be referred to as a terminal rivet) from being pulled out of the terminal through-hole in the can end wall.

The terminal part shown in Figure 4 is provided with a recessed welding region 4k on the head portion. The recessed welding region 4k is annularly surrounded by a flange region 4n of the head portion. The recessed welding portion 4n is preferably annular and provided in the centre of the annular head portion. The provision of a recess on the head portion decreases the material consumption and weight of the terminal part. In addition, it also allows for the terminal part 4 to be attached to a current collecting plate in a secondary cell by laser beam welding performed from the outside of the cell. The provision of a recess locally decreases the distance between the outer surface 4a of the terminal part and a contact portion 4b of the shaft portion 4d, which contact portion 4b is adapted to be attached to the current collecting plate. Consequently, a laser beam directed onto the welding portion can heat the contact portion of the shaft portion 4d to a sufficient degree such that it can be welded to a current collecting plate.

The recessed welding portion 4k is preferably provided as a blind hole in the head portion. The blind hole is preferably annular, but other shapes are also contemplated. The blind hole may be formed in the head portion by for example drilling or milling.

One surface of the recessed welding portion 4k is preferably arranged in a plane parallel to the outer surface of the head portion. The depth of the hole is preferably at least 1 cm, such as at least 2 cm, such as at least 3 cm, such as at least 4 cm, such as at least 5 cm, such as in the range of 1-10 cm. The depth refers to the distance between the surface of the welding portion arranged in a plane parallel to the outer surface of the head portion, measured in the normal direction of these planes.

The terminal part disclosed in Figure 4 may replace the terminal part of Figure 3 in the examples shown in Figures 1 and 2.

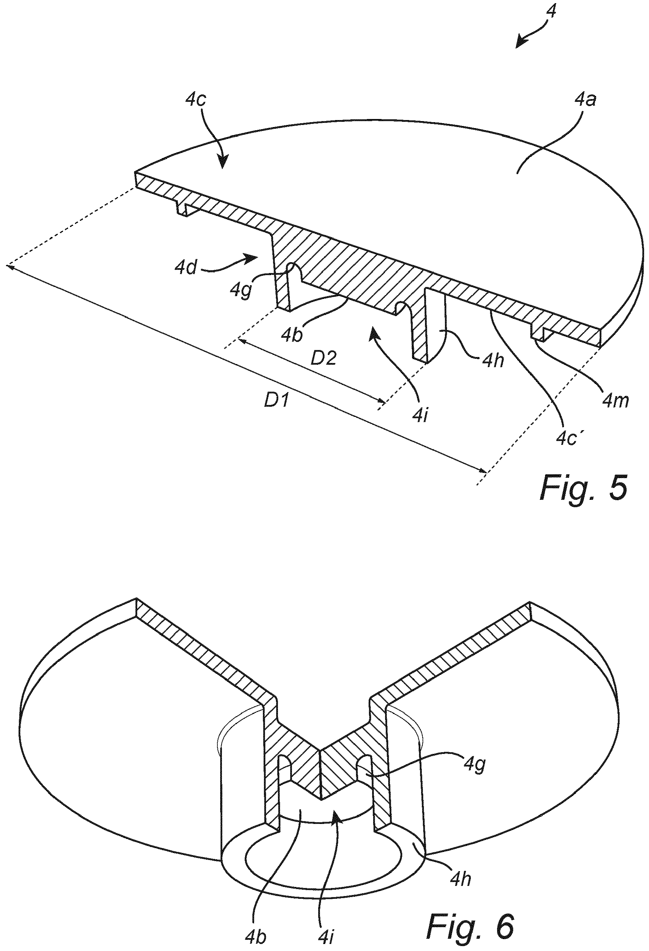

Figure 5 shows a terminal part 4. The terminal part 4 is shown herein as the type of terminal part shown in Figures 1, 2 and 3, but it may also be of the type shown in Figure 4. The lower surface 4c' of the head portion 4c of the terminal part is provided with a protruding element 4m. Preferably, the protruding element 4m is provided as an annular ridge extending on the head portion around an outer perimeter of the shaft 4d.

In a cylindrical secondary cell, there is typically provided an electrically isolating part (not shown) arranged between the head portion 4c and the can end wall. The electrically isolating part may be configured to surround the shaft portion of the terminal part. The electrically isolating part typically has a diameter that is larger than a diameter of the head portion. By providing a protruding element on the head portion, a tighter seal between the electrically isolating portion and the head portion 4c can be obtained. The electrically isolating part is typically made of a softer material, such as a polymer, than the terminal part. Consequently, the protruding part 4m may protrude into the electrically isolating part, which is then elastically or plastically deformed, to form a tight seal between the head portion and the electrically isolating part.

The protruding element may protrude at least 3 mm, such as at least 4 mm, such as at least 5 mm from the outer surface of the head portion.

Figure 6 depicts, in cross-section, the terminal part shown in figure 3. The protruding portion 4h is radially surrounding the recess 4i. The contact portion 4b is arranged in the recess 4i. The groove 4g is arranged in the recess 4i and extends along a perimeter of the contact portion 4b. Herein, the groove 4g is a continuous slot extending annularly in the recess 4i so that it extends along a perimeter of the contact portion 4b.

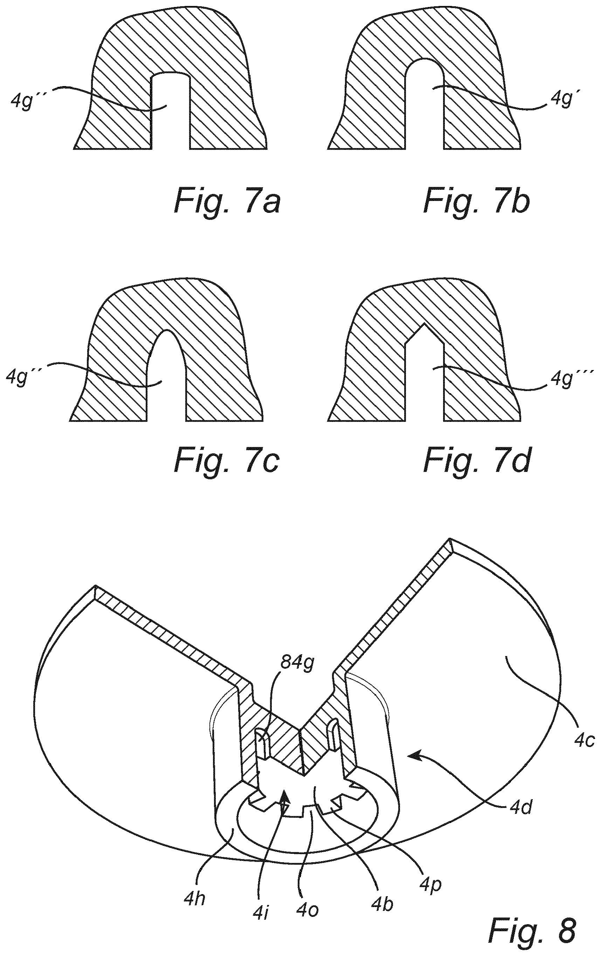

Figures 7a-d, depict, in cross-section, different examples of the groove 4g of the terminal part discussed in figure 6. In figure 7b, at least part of the groove 4g' is semi-circular. In figures 7a and 7c, at least part of the groove 4g" is semi-elliptical. In figure 7d, at least part of the groove 4g'" has a V-shaped profile.

Figure 8 depicts an example similar to the example shown in Figure 6, but where the groove 84g is semi-slotted. Expressed differently, the groove 84g comprises sequentially arranged slots 4o and intermediate material portions 4p. The slots and the intermediate material portions may have equal or differing dimensions. Expressed differently, the slots and the intermediate material portions may be uniform or non-uniform in shape. For example, the intermediate material portions may be thinner and/or shorter as compared to the slots so as to allow for mechanical deformation of the intermediate material portions during riveting. The slots and intermediate material portions may be distributed evenly or randomly along the recess. This decreases the risk of mechanical failure such as fracture of and/or crack formation in the terminal part during riveting. Expressed differently, the semi-slotted groove 84g may be considered a sequential arrangement of cavities and solid parts. It is understood that the solid parts are arranged to deform during riveting. It is further understood that the solid parts may provide mechanical stability to the terminal portion prior to riveting and during manufacture.

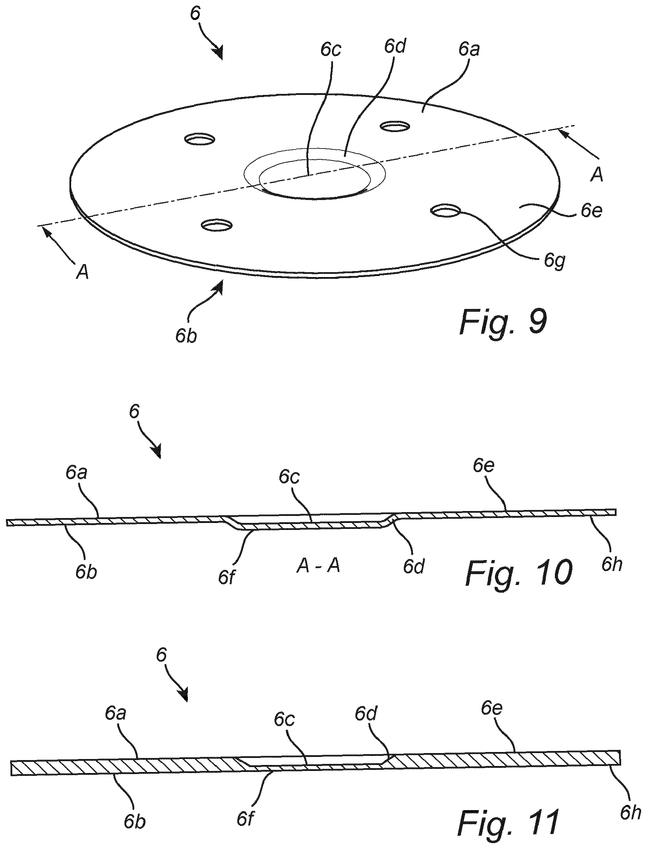

Figure 9 shows the current collecting plate of Figures 1 and 2 in more detail. The current collecting plate 6 of figures 1 and 2 may be used in cylindrical secondary cells and with terminal parts of other design than the ones described herein.

The current collecting plate 6 is configured to be in direct electrical contact with a conductive sheet 3a of an electrode roll 3 and in direct electrical contact with a terminal part 4. The electrode roll may preferably be a tab-less electrode roll. The terminal part 4 may form an external terminal of the cell 1.

The current collecting plate 6 of figure 3 comprises a first end surface 6a and an opposite second end surface 6b. When assembled, the first end surface 6a faces away from the electrode roll 3 and the second end surface 6b faces the electrode roll 3.

The current collecting plate 6 comprises an inner contact region 6c and an outer contact region 6e. The outer contact region comprises a number of electrolyte flow holes 6g. In the present example, the cell 1 is circular cylindrical and the current collecting plate 6 has the general shape of a circular disc. The inner contact region 6c is configured to be in direct electrical contact with the terminal part 4 and the outer contact region 6e is configured to be in direct electrical contact with the first conductive sheet 3a (see figure 2). The inner contact region 6c is cylindrical and the outer contact region 6e is circular annular.

The inner contact region 6c is recessed in relation to the outer contact region 6e. The annular outer contact region 6e is arranged in a first plane, and the circular inner contact region 6c is arranged in a second plane that is parallel to the first plane. The inner contact region 6c and the outer contact region 6e are uninterruptedly joined by an interface region 6d. The term "uninterruptedly joined" denotes that the intermediate region is made of a continuous material which does not contain any holes. In the current collecting plate 6, the intermediate region may be slanted with regard to the surfaces of outer contact region and the inner contact region.

Turning to figure 2, the recessed current collecting plate 6 facilities the use of a rivet as a terminal element 4. The shop head 4b, 4h will occupy some space within the cell 1, which space is provided by current collecting plate 6 by the inner contact region 6c being recessed. The rivet shop head 4b, 4h and the inner contact region 6c may be positioned within the central channel 3c of the electrode roll 3.

Figure 10 shows an example of the current collecting plate 6 shown in Figure 9. The recessed inner contact region 6c may be provided by depressing the inner contact region 6c in relation to the outer contact region 6e, for example by punching the inner contact region 6c to obtain the depression. In this example, the opposite second end surface 6b will not be arranged in a single plane. The current collecting plate 6 comprises an inner bottom portion 6f arranged opposite of the recessed inner contact region 6c and an outer bottom portion 6h arranged opposite the outer contact region 6e, wherein the inner bottom portion 6f and the outer bottom portion 6h extend in parallel planes that are distanced from each other. In this example, the inner bottom portion 6f and the outer bottom portion 6h are distanced along an axis that is normal to the parallel planes.

Alternatively, as shown in Figure 11, the recessed inner contact region 6c is provided as an actual recess in the current collecting plate 6. This means that the thickness of the plate 6 in the inner contact region 6c is smaller than the thickness of the plate in the outer contacting region 6e. In this example, the opposite second end surface 6b will be arranged in a single plane. The current collecting plate 6 may thus be considered to comprise an inner bottom portion 6f arranged opposite of the inner contact region 6c and an outer bottom portion 6h arranged opposite the outer contact region 6e, wherein the inner bottom portion 6f and the outer bottom portion 6h extend in a mutual plane.

Furthermore, although specific terms may be employed herein, they are used in a generic and descriptive sense only and not for purposes of limitation. Therefore, persons skilled in the art would recognize numerous variations to the described examples that would still fall within the scope of the appended claims. As used herein, the terms "comprise/comprises" or "include/includes" do not exclude the presence of other elements or steps. Furthermore, although individual features may be included in different claims (or examples), these may possibly advantageously be combined, and the inclusion of different claims (or examples) does not imply that a certain combination of features is not feasible and/or advantageous. In addition, singular references do not exclude a plurality. Finally, reference numerals in the claims are provided merely as a clarifying example and should not be construed as limiting the scope of the claims in any way.

## Claims

1. A terminal part (4) for a cylindrical secondary cell, comprising:
a head portion (4c) adapted to form an external terminal of the cylindrical secondary cell; and
a shaft portion (4d) adapted to extend through a wall of the cylindrical secondary cell, the shaft portion having a first end attached to the head portion and a second end arranged to face a current collecting plate in the cylindrical secondary cell;
wherein the second end of the shaft portion comprises:
a protruding portion (4h) radially surrounding a recess (4i),
a contact portion (4b) arranged in the recess, and
a groove (4g) arranged in the recess and extending along a perimeter of the contact portion.

2. The terminal part according to claim 1, wherein the terminal part is a rivet, wherein the head portion is adapted to, after riveting, form a factory rivet head, and wherein the shaft portion is adapted to, after riveting, form a shop rivet head.

3. The terminal part according to claim 1 or 2, wherein at least part of the groove is semi-circular (4g'), semi-elliptical (4g") or semi-slotted (4g"').

4. The terminal part according to any one of the preceding claims, wherein the head portion is provided with a protrusion element (4m) arranged at a surface of the head portion (4c) adapted to face the wall of the cylindrical secondary cell.

5. The terminal part according to any one of the preceding claims, wherein the head portion (4c) comprises a welding region (4k) and a flange region (4n), the flange region radially surrounds the welding region, and the welding region is recessed in relation to the flange region (4n).

6. A cylindrical secondary cell (1) comprising:
an electrode roll (3) comprising a conductive sheet (3a);
a current collecting plate (6) configured to be in direct electrical contact with the conductive sheet (3a);
a can (2) arranged to at least partly enclose the electrode roll (3); and
a terminal part (4) as defined in any one of claims 1-5, wherein the terminal part is riveted to the can and configured to be in direct electrical contact with the current collecting plate.

7. A current collecting plate (6) for a cylindrical secondary cell, comprising:
an inner contact region (6c) configured to be in direct electrical contact with a terminal part;
an outer contact region (6e) configured to be in direct electrical contact with a conductive sheet of an electrode roll of a cylindrical secondary cell, wherein the outer contact region radially surrounds the inner contact region, and wherein the inner contact region is recessed in relation to the outer contact region; and
an interface region (6d) arranged between the inner contact region and the outer contact region, wherein the interface region uninterruptedly joins the inner contact region and the outer contact region.

8. The current collecting plate according to claim 7, wherein the outer contact region comprises a number of electrolyte flow holes (6g).

9. A cylindrical secondary cell (1) comprising
an electrode roll (3) comprising a conductive sheet (3a);
a terminal part (4);
a current collecting plate (6) as defined in any one of claims 7-8 configured to be in direct electrical contact with the conductive sheet and the terminal part.

10. A terminal part (4) for a cylindrical secondary cell comprising:
a head portion (4c) adapted to form an external terminal of the cylindrical secondary cell; and
a shaft portion (4d) adapted to extend through a wall of the cylindrical secondary cell;
wherein the head portion comprises a welding region (4k) and a flange region (4n), wherein the flange region radially surrounds the welding region, and wherein the welding region is recessed in relation to the flange region.

11. The terminal part according to claim 10, wherein the welding region is concentrically arranged within the shaft portion.

12. The terminal part according to claim 10 or 11, wherein the terminal part is a rivet, wherein the head portion is adapted to, after riveting, form a factory rivet head, and wherein the shaft portion is adapted to, after riveting, form a shop rivet head.

13. The terminal part according to any one of claims 10-12, wherein the shaft portion has a first end attached to the head portion and a second end arranged to face a current collecting plate in the cylindrical secondary cell;
wherein the second end of the shaft portion comprises:
a protruding portion (4h) radially surrounding a recess,
a contact portion (4b) arranged in the recess, and
a groove (4i) arranged in the recess and extending along a perimeter of the contact portion.

14. The terminal part according to any one of claims 10-13, wherein the head portion (4c) is provided with a protrusion element (4m) arranged at a surface of the head portion adapted to face the wall of the cylindrical secondary cell.

15. A cylindrical secondary cell (1) comprising:
an electrode roll (3) comprising a conductive sheet (3a);
a can (2) arranged to at least partly enclose the electrode roll (3);
a current collecting plate (6) configured to be in direct electrical contact with the conductive sheet (3a; and
a terminal part (4) as defined in any one of claims 10-14, wherein the terminal part is riveted to the can and configured to be in direct electrical contact with the current collecting plate.
